Europäisches Patentamt

(19) European Patent Office        (11) Publication number: **0 027 380**

Office européen des brevets        **B1**

(12) **EUROPEAN PATENT SPECIFICATION**

(45) Date of publication of patent specification: **27.12.84**        (51) Int. Cl.³: **B 01 J 29/06, C 10 G 45/64**

(21) Application number: **80303613.6**

(22) Date of filing: **14.10.80**

(54) **A method of preparing a metal-containing zeolite catalyst and the use of the catalyst in dewaxing gas oil.**

(30) Priority: **15.10.79 US 84933**

(43) Date of publication of application:
**22.04.81 Bulletin 81/16**

(45) Publication of the grant of the patent:
**27.12.84 Bulletin 84/52**

(84) Designated Contracting States:
**BE DE FR GB IT NL**

(56) References cited:
**FR-A-2 233 384**
**GB-A-1 539 314**
**GB-A-2 007 107**
**US-A-3 700 585**
**US-A-3 781 199**
**US-A-3 876 525**
**US-A-3 894 938**
**US-A-4 098 836**

(73) Proprietor: **MOBIL OIL CORPORATION**
**150 East 42nd Street**
**New York New York 10017 (US)**

(72) Inventor: **Wilson, Robert Currin Jr.**
**138 North Bayard Avenue**
**Woodbury New Jersey 08096 (US)**

(74) Representative: **Cooper, John Anthony**
**CARPMAELS & RANSFORD 43 Bloomsbury**
**Square**
**London WC1A 2RA (GB)**

Courier Press, Leamington Spa, England.

## Description

### Background of the Invention
*Field of the Invention*

This invention relates to an improved method for preparing a metal-containing zeolite catalyst, such as a dewaxing catalyst composite of the palladium zeolite/alumina type.

*Description of the Prior Art*

Zeolite materials, both natural and synthetic, have been demonstrated in the past to have catalytic properties for various types of hydrocarbon conversions. Certain zeolite materials are ordered, porous crystalline aluminosilicates having a definite crystalline structure, as determined by X-ray diffraction, within which there are a large number of smaller cavities which may be interconnected by a small number of still smaller channels or pores. These cavities and pores are precisely uniform in size within a specific zeolitic material. Since the dimensions of these pores are such as to accept for adsorption molecules of certain dimensions while rejecting those of larger dimensions, these materials have come to be known as "molecular sieves" and are utilized in a variety of ways to take advantage of these properties.

Such molecular sieves, both natural and synthetic, include a wide variety of positive ion-containing crystalline aluminosilicates. These aluminosilicates can be described as a rigid three-dimensional framework of $SiO_4$ and $AlO_4$ in which the tetrahedra are cross-linked by the sharing of oxygen atoms whereby the ratio of the total aluminum and silicon atoms to oxygen atoms is 1:2. The electrovalence of the tetrahedra containing aluminum is balanced by the inclusion in the crystal of a cation, for example, an alkali metal or an alkaline earth metal cation. This can be expressed wherein the ratio of aluminum to the number of various cations, such as Ca/2, Sr/2, Na, K or Li is equal to unity. One type of cation may be exchanged either entirely or partially by another type of cation utilizing ion exchange techniques in a conventional manner. By means of such cation exchange, it has been possible to vary the properties of a given aluminosilicate by suitable selection of the cation. The spaces between the tetrahedra are occupied by molecules of water prior to dehydration.

Prior art techniques have resulted in the formation of a great variety of synthetic aluminosilicates. These aluminosilicates have come to be designated by letter or other convenient symbols, as illustrated by zeolite A (U.S. Patent 2,882,243), zeolite X (U.S. Patent 2,882,244), zeolite Y (U.S. Patent 3,130,007), zeolite ZK-5 (U.S. Patent 3,247,195) zeolite ZK-4 (U.S. Patent 3,314,752), zeolite ZSM-5 (U.S. Patent 3,702,886), zeolite ZSM-11 (U.S. Patent 3,709,979), zeolite ZSM-12 (U.S. Patent 3,832,449), zeolite ZSM-35 (U.S. Patent 4,016,245) and zeolite ZSM-23 (U.S. Patent 4,076,842), merely to name a few.

In the case of many catalysts, it is desired to incorporate the zeolite with another material resistant to the temperatures and other conditions employed in organic conversion processes. Such materials include active and inactive materials as well as inorganic materials such as clays, silica and/or metal oxides. Inactive materials suitably serve as diluents to control the amount of conversion in a given process so that products can be obtained economically and orderly without employing other means for controlling the rate of reaction.

Binders useful for compositing with the ZSM-5 type catalyst herein also include inorganic oxides, notably alumina, which is particularly preferred.

In addition to the foregoing materials, the zeolite catalyst can be composited with a porous matrix material such as silica-alumina, silica-magnesia, silica-zirconia, silica-thoria, silica-beryllia, silica-titania as well as ternary compositions such as silica-alumina-thoria, silica-alumina-zirconia, silica-alumina-magnesia and silica-magnesia-zirconia. The relative proportions of finely divided crystalline zeolite and inorganic oxide matrix vary widely with the crystalline zeolite content ranging from about 1 to about 90 percent by weight and more usually, in the range of about 2 to about 50 percent by weight of the composite.

It is known to treat gas oil fractions, i.e. petroleum fractions having an initial boiling point of at least about 165°C (330°F), so as to selectively remove paraffinic hydrocarbons therefrom. This technique is desirable in order to permit many of these fractions to meet a pour point standard. In particular, many light gas oil fractions, that is, those which are used for No. 2 fuel (home heating oil) and/or Diesel fuel, have pour points which are too high to permit their intended use. A typical pour point specification is −18°C (0°F) whereas it is not uncommon for such gas oil fractions to have untreated pour points of 10°C (50°F) or higher.

Patents have issued on improved hydrodewaxing processes and catalysts, including U.S. Patent No. 3,700,585 which discloses and claims such process using a ZSM-5 type zeolite catalyst. U.S. Patent 3,894,938 is based upon the discovery that in typical refinery operations where gas oils are subjected to all of dewaxing, desulfurizing and denitrogenating, the operation is improved and rendered more efficient if catalytic hydrodewaxing, using the ZSM-5 type and related zeolite catalysts is followed by a hydrodesulfurization treatment rather than being preceded by such treatment.

US—A—3,876,525 and 3,781,199, and GB—A—1,539,314 disclose various techniques for preparing catalysts containing various zeolites, Group VIII metals and binders.

### Summary of the Invention

In accord with the present invention there has now been discovered an improved method of preparing a catalyst composite, e.g., a hydrodewaxing catalyst, which comprises adding a Group VIII (as defined by the National Bureau of Standards) metal of the Periodic Table of Elements in aqueous, or non-aqueous, solution to a dried low alkali or alkaline earth content zeolite starting material with mixing to provide the desired metal content, then adding a binder and water in amount sufficient to produce an extrudable composite mass, then extruding, drying and calcining the resultant composite catalyst.

Although this method is particularly useful for preparing dewaxing catalyst, it can be employed to make any metal-containing zeolite catalyst composite using, but not limited to zeolite X, Y, ZK-5, ZK-4, ZSM-5, ZSM-11, ZSM-12, ZSM-23, and ZSM-35. The binder can be any one of, but not limited to, naturally occurring clays, e.g. montmorillonite and kaolin families, inorganic oxides, e.g. alumina, silica-alumina, silica-zirconia, silica-alumina-zirconia and the like, and combinations thereof.

The binder can be present in amount between about 5 and 99% wt. with respect to the whole, preferably between about 5 and 60% wt., and more preferably between about 20 and 50% wt.

The Group VIIIA metal can be present in amounts of at least 0.01% wt., with respect to the zeolite. The upper limit of metal content within practical economic considerations, when using palladium for example, will be governed by the pore volume of the zeolite and the solubility of the metal salt employed.

The alkali (e.g. Na) or alkaline earth (e.g. Ca) metal is critical in that it must be present in low amounts (e.g. Example 1, 0.02% wt. Na). It must also be present in amount no more than about 0.1% wt.

Brief Description of the Drawing

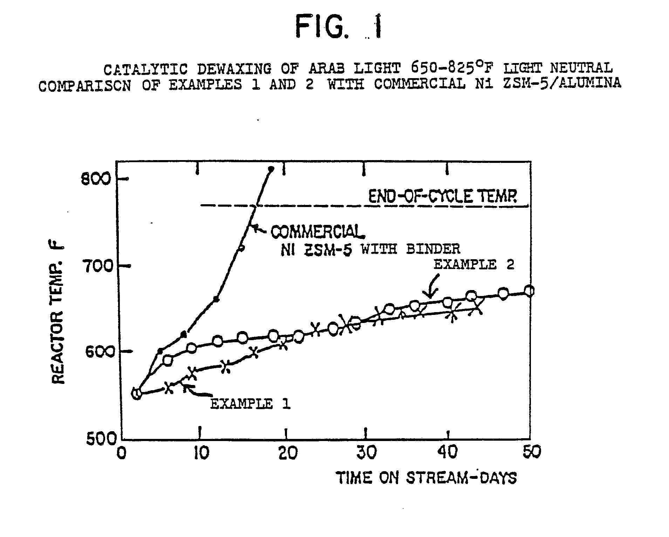

Figure 1 is a comparision plot of the results obtained in catalytic dewaxing of Arab light crude oil using the products of Examples 1 and 2.

Representative ion exchange techniques are disclosed in a wide variety of patents including U.S. Patents 3,140,249; 3,140,251; and 3,140,253.

Teh preferred procedure for preparing a PD ZSM-5/Al₂O₃ composite catalyst comprises the following steps:

(1) preparing the low-sodium species of ZSM-5 by known precedures and washing (e.g. U.S. Patent 3,271,418 to name one)

(2) drying

(3) while mixing in a muller, adding sufficient Pd-containing solution (no free water) to the zeolite to provide the desired Pd content

(4) with continued mixing, adding the $Al_2O_3$ powder and sufficient water to produce an extrudable mass

(5) extruding
(6) drying and
(7) calcining.

The foregoing preferred procedure of preparing a Pd ZSM-5/Al₂O₃ composite catalyst may also be used in the preparation of bound catalysts containing other Group VIIIA metals, as well as for other zeolites.

Table 1 immediately set forth hereinbelow compares the step-wise preparation of conventional Ni ZSM-5 alumina-bound catalyst and the invention method Pd ZSM-5 alumina-bound catalyst, side by side.

TABLE 1
Preparation of Alumina-Bound
ZSM-5 Catalysts

| Conventional Ni ZSM-5 | New Method Pd ZSM-5 |
|---|---|
| Cryst. ZSM-5 | Cryst. low-Na ZSM-5 |
| Filtering | Filtering |
| Washing | Washing |
| Drying | Drying |
| Mulling w/Al₂O₃ | Mulling w/Pd solution, then Al₂O₃ |
| Extruding | Extruding |
| Drying & Sizing | Drying & Sizing |
| Precalcining | |
| NH₄ exc. & washing | |
| Ni exc. & washing | |
| Calcining | Calcining |

As can be seen, the preferred invention method of preparing Pd ZSM-5/Al₂O₃ catalyst distinctly differs from the prior art method of manufacturing Ni ZSM-5/Al₂O₃. Indeed, it has been found that Pd will not be incorporated uniformly throughout the catalyst particle by the conventional method, just seen in Table 1. The invention has several advantages in that (1) it would avoid a chromatographic effect when contacting a bed of ZSM-5/Al₂O₃ extrudate with a flowing Pd solution, (2) it would locate all of the Pd on the zeolite, and (3) it would provide 100% utilization of the Pd. Moreover, the advantages gained by operating in accord with the invention are extremely important in our energy and metal conservation programs. By the method of the invention there is a saving on energy, less amounts of metals have to be used, and pollution is reduced. Thus, there is achieved a conservation of energy, conservation of water and scarce metals, and a reduction of pollutants entering our environment.

Catalyst made by the procedures described hereinabove showed usefulness in hydrodewaxing tests with the present catalyst, processing either a heavy neutral waxy raffinate or a transformer oil raffinate, showed significantly less catalyst aging than with commercial Ni ZSM-5 catalyst.

In order to more fully illustrate the nature of the invention and the manner of practicing the same, the following examples are presented.

## Example 1

Preparation of 65 wt. % Pd ZSM-5
(0.6 wt. % Pd)/35 wt. % $Al_2O_3$ hydrodewaxing catalyst composite

Washed low-sodium (0.02 wt. %) ZSM-5 wet cake containing 1180 g of solids was dried for 16 hours at 121°C (250°F) then mulled, to a powder in a pan type mixer, adding 7.1 g palladium as tetrammine palladium (II) chloride solution, and then blending in 636 g $\alpha$-alumina monohydrate, followed by water, followed by extrusion to 0.16 cm /1/16 inch) diameter. The extrudate was dried in air for 16 hours at 62.8°C (145°F) to develop strength for handling and again at 135—148.9°C (275—300°F) in nitrogen for 24 hours, for removing the bulk of the moisture. It was then twice calcined in nitrogen to remove the organics present in the ZSM-5, first for 3 hours at 300°C (572°F) then for 3 hours at 538°C (1000°F). Finally it was air-calcined at 538°C (1000°F) for 3 hours. Although a rather cumbersome heating procedure was used in this example, it is to be understood that conventional calcination will work just as well. Properties of the catalyst are shown below:

TABLE II
Properties of Pd ZSM-5 Catalyst
of Example 1

| Chemical Analysis, wt % | |
|---|---|
| Pd | 0.36 |
| Cl | 0.36 |
| Density, g/cc | |
| Packed | 0.54 |
| Particle | 0.89 |
| Real | 2.70 |
| Surface Area, m²/g | 346 |
| Pore Volume, cc/g | 0.75 |
| Average Pore Diameter, Å | 87 |
| Pore Vol. Distr., % in Pores of | |
| 0—30 Å | 20 |
| 30—50 | 10 |
| 50—80 | 14 |
| 80—100 | 4 |
| 100—150 | 8 |
| 150—200 | 4 |
| 200—300 | 4 |
| 300+ | 36 |

### Example 2
### Preparation of 0.5% Pd ZSM-5
### binder-free catalyst

A portion of precalcined NH$_4$ ZSM-5 was calcined in air and then re-ammoniated. Thereafter, the product was palladium-exchanged and dried at 148°C (300°F), calcined in air, and hydrogen treated at 538°C (1000°F).

The products of Examples 1 and 2, respectively, were tested in the catalytic dewaxing of a 100 SUS light neutral distillate derived from Arab Light crude oil. The distillate had a boiling range of 343—441°C (650—825°F) and a pour point of 29°C (+75°F). Operating conditions were a pressure of 3447 kPa (500 psi), liquid hourly space velocity of 2.0, H$_2$ circulation rate of 445 m³/m³ (2500 SCF/B), (289°C) (550°F) start of cycle reactor temperature. The target pour point was (−18°C) (0°F). Figure 2 shows a plot of the results obtained. As can be seen the invention catalyst with the binder (Example 1) was better than the previous best laboratory Pd catalyst without binder (Example 2). Based on the first 50 days of on stream comparison there was a showing of:

(1) higher initial activity
(2) lower initial aging rate.

### Example 3

This catalyst was prepared in the same manner as Example 1, except that it contained no Cl⁻. It was prepared with Pd(NH$_3$)$_4$(NO$_3$)$_2$ instead of Pd(NH$_3$)$_4$Cl$_2$.

### Example 4

This catalyst was similarly prepared as in Example 1, except that Ni(NO$_3$)$_2$ was used instead of the Pd(NH$_3$)$_4$Cl$_2$. Conventional calcination in a muffle furnace was employed on the extruded product.

In an n-dodecane screening test of the catalysts produced by the methods of Examples 1 and 3, using Ni ZSM-5/alumina catalyst for comparison, the initial activities of the Example 1 catalyst and the Example 3 catalyst were alsmost the same. After 26 1/2 hours on stream (LHSV, Hr⁻¹ = 79) both catalysts showed similar activities. Both also exhibited almost identical selectivity characteristics. Conversion of n-dodecane was 66.2 and 61.6, respectively; whereas the comparison catalyst (commercial Ni ZSM-5/alumina catalyst) showed 38.2% at 6.8 hrs. v.s. 70.1 and 56.6, respectively, for the catalysts of Examples 1 and 3 for the same time on stream.

### Claims

1. A method of preparing a metal-containing zeolite catalyst which comprises forming solid particles containing a Gp VIIIA metal, a zeolite and a binder characterised by mulling a solution of a Group VIIIA metal with a zeolite containing no more than 0.1% wt. alkali metal to provide the desired Gp VIIIA metal concentration in said zeolite, mulling the metal-containing zeolite with a binder material and water in amount sufficient to produce an extrudable composite mass comprising metal-zeolite and binder, and extruding, drying, and calcining the resultant catalyst composite.

2. A method according the claim 1 wherein said Group VIIIA metal is palladium or nickel and said binder is alumina.

3. A method according to claim 1 or claim 2 wherein said zeolite is zeolite ZSM-5.

4. A method according to any preceding claim wherein the zeolite mulled with the solution of a Group VIIIA metal is a dried zeolite.

5. A method according to any preceding claim wherein said desired Gp VIIIA metal concentration is at least 0.01% wt. With respect to said zeolite, and said binder constitutes between 5 and 99% wt. of the composite.

6. A method according to any of claims 2 to 5 wherein said palladium or nickel is present in an amount of at least 0.1% wt. with respect to said zeolite.

7. Use in dewaxing hydrocarbon stocks of a catalyst prepared by the method claimed in any of claims 1 to 6.

8. Use according to claim 7 wherein the dewaxing is carried out under hydrogen pressure.

### Revendications

1. Un procédé de préparation d'un catalyseur zéolithique contenant un métal qui consiste à former des particules solides renfermant un métal du groupe VIIIA, une zéolithe et un liant, caractérisé par l'empâtage à la meule d'une solution d'un métal du groupe VIIIA avec une zéolithe ne contenant pas plus de 0,1% en poids d'un métal alcalin pour assurer dans ladite zéolithe la concentration en métal du groupe VIIIA désirée, par l'empâtage à la meule de la zéolithe contenant un métal avec un liant et de l'eau en une quantité suffisante pour produire une masse composite extrudable comprenant un métal-zéolithe et liant, par l'extrusion, le séchage et la calcination du catalyseur composite résultant.

2. Un procédé selon la revendication 1, caractérisé en ce que ledit métal du groupe VIIIA est le palladium ou le nickel et que ledit liant est l'alumine.

3. Un procédé selon la revendication 1 ou 2, caractérisée en ce que ladite zéolithe est la zéolithe ZSM-5.

4. Un procédé selon l'une quelconque des revendications précédentes, caractérisé en ce que la zéolithe empâtée avec la solution d'un métal du groupe VIIIA est une zéolithe séchée.

5. Un procédé selon l'une quelconque des revendications précédentes, caractérisé en ce que la concentration en métal du groupe VIIIA désirée est d'au moins 0,01% en poids par rapport à ladite zéolithe et que ledit liant constitue entre 5 et 99% en poids du composite.

6. Un procédé selon l'une quelconque des revendications 2 à 5, caractérisé en ce que le palladium ou le nickel est présent en une quantité d'au moins 0,1% en poids par rapport à ladite zéolithe.

7. Utilisation pour le déparaffinage de produits hydrocarbonés d'un catalyseur préparé par le procédé revendiqué dans l'une quelconque des revendications 1 à 6.

8. Utilisation selon la revendication 7, caractérisée en ce que le déparaffinage est réalisé sous pression d'hydrogène.

**Patentansprüche**

1. Verfahren zur Herstellung eines metallhaltigen Zeolith-Katalysators, das die Ausbildung von festen Teilchen umfaßt, die ein Metall der Gruppe VIIIA, einen Zeolithen und ein Bindemittel enthalten, gekennzeichnet durch Vermahlen einer Lösung eines Metalls der Gruppe VIIIA mit einem Zeolithen, der nicht mehr als 0,1 Gew.-% Alkalimetall enthält, um in dem genannten Zeolithen die gewünschte Konzentration des Metalls der Gruppe VIIIA zu erzeugen, Vermahlen des metallhaltigen Zeolithen mit einem Bindemittel-Material und Wasser in einer Menge, die ausreicht, eine extrudierbare Verbundmasse zu erzeugen, die den Metall-Zeolithen und das Bindemittel enthält, sowie das Extrudieren, Trocknen und Kalzinieren des erhaltenen Verbund-Katalysators.

2. Verfahren nach Anspruch 1, bei dem das genannte Metall der Gruppe VIIIA Palladium oder Nickel ist und das genannte Bindemittel Aluminiumoxid ist.

3. Verfahren nach Anspruch 1 oder Anspruch 2, bei dem der genannte Zeolith der Zeolith ZSM-5 ist.

4. Verfahren nach einem beliebigen vorausgehenden Anspruch, bei dem der Zeolith, der mit der Lösung des Metalls der Gruppe VIIIA vermahlen wird, ein getrockneter Zeolith ist.

5. Verfahren nach einem beliebigen vorausgehenden Anspruch, bei dem die genannte gewünschte Konzentration des Metalls der Gruppe VIIIA wenigstens 0,01 Gew.-%, bezogen auf den genannten Zeolithen, beträgt, und worin das genannte Bindemittel zwischen 5 und 99 Gew.-% des Verbundmaterials bildet.

6. Verfahren nach einem beliebigen der Ansprüche 2 bis 5, bei dem das genannte Palladium oder Nickel in einer Menge von wenigstens 0,1 Gew.-%, bezogen auf den genannten Zeolithen, vorliegt.

7. Verwendung eines Katalysators, der nach dem Verfahren, das in einem beliebigen der Ansprüche 1 bis 6 beansprucht wird, hergestellt wurde, zur Entparaffinierung von Kohlenwasserstoff-Einsatzmaterialen.

8. Verwendung nach Anspruch 7, wobei das Entparaffinieren unter Wasserstoffdruck durchgeführt wird.

0 027 380

# FIG. 1

CATALYTIC DEWAXING OF ARAB LIGHT 650–825°F LIGHT NEUTRAL
COMPARISON OF EXAMPLES 1 AND 2 WITH COMMERCIAL Ni ZSM–5/ALUMINA

1